**Europäisches Patentamt**

**European Patent Office**

**Office européen des brevets**

(11) Veröffentlichungsnummer: **0 090 287 B1**

(19)

(12) **EUROPÄISCHE PATENTSCHRIFT**

(45) Veröffentlichungstag der Patentschrift:
24.07.85

(51) Int. Cl.⁴: **A 01 N 37/18**

(21) Anmeldenummer: **83102683.6**

(22) Anmeldetag: **18.03.83**

(54) **Insektenvertreibungsmittel.**

(30) Priorität: **30.03.82 DE 3211632**

(43) Veröffentlichungstag der Anmeldung:
**05.10.83 Patentblatt 83/40**

(45) Bekanntmachung des Hinweises auf die Patenterteilung:
**24.07.85 Patentblatt 85/30**

(84) Benannte Vertragsstaaten:
**AT BE CH DE FR GB IT LI LU NL SE**

(56) Entgegenhaltungen:
**CA - A - 865 069**
**US - A - 3 501 572**
**US - A - 3 825 555**

**CHEMICAL ABSTRACTS, Band 75, Nr. 9, 30. August 1971, Seite 355, Nr. 62522d, Columbus, Ohio, USA, M.D. ANWARULLAH et al.: "Distillation fraction of castor seed oil as a repellent against mosquitoes"**
**Cosmetics, Science and Technology, vol. 1, 1972, S. 272**

(73) Patentinhaber: **BAYER AG, Konzernverwaltung RP Patentabteilung, D-5090 Leverkusen 1 Bayerwerk (DE)**

(72) Erfinder: **Charlet, Egbert, Dr., Oelbergweg 13, D-5064 Roesrath (DE)**
Erfinder: **Finkel, Peter, Isidor-Caro-Strasse 56, D-5000 Koeln 80 (DE)**
Erfinder: **Strickmann, Heribert, Galileistrasse 5, D-5000 Koeln 80 (DE)**

## Beschreibung

Die vorliegende Erfindung betrifft Insektenvertreibungsmittel zur Anwendung auf der menschlichen Haut auf der Basis von N,N-Diethyl-m-toluamid (DEET) mit verlängerter Wirksamkeit.

DEET ist ein bekanntes und bewährtes Insektenrepellent und gilt allgemein als sehr gutes Allround-Repellent (Kochhar, R.K., Dixit, R.S., Somaya, C.J.; „Indian J. Med. Res.", 62, 1 January 1974).

Für eine wünschenswerte Wirksamkeit von 6 bis 8 h auf der menschlichen Haut sind bei den meist üblichen Formulierungen (ethanolische oder isopropanolische Lösungen) Konzentrationen von 30 bis 50% erforderlich (Nowak, G.A.; „Die kosmetischen Präparate", Verlag für chem. Industrie H. Ziolkowsky KG, Augsburg, 1975).

Die Prüfung der Wirksamkeitsdauer von Repellent-Formulierungen gegen Mücken erfolgt üblicherweise in vivo an der Gelbfiebermücke (Aedes aegypti) [Lust, S.; „Parf. u. Kosm.", 41, 304 (1960)]. Hierzu werden jeweils 500 weibliche Mücken in einen mit Gaze bespannten Käfig von 35 × 35 × 35 cm gegeben. Die Stechbereitschaft der Mücken wird durch Einbringen eines Armes der jeweiligen Testperson überprüft. Als Kriterium einer positiven Stechbereitschaft gilt das Anfliegen, Stechen und Saugen einer grösseren Anzahl Mücken.

Die Prüfung der Repellentien findet im Labor bei einer Temperatur von 22°C und einer relativen Luftfeuchtigkeit von 70 ± 10% statt. Die Applikation der Testsubstanzen erfolgt unmittelbar vor Versuchsbeginn. Die Menge von 0,1 ± 0,01 ml Repellentsubstanz wird mit einem Glasstab möglichst gleichmässig auf einer Fläche von 100 cm auf dem Unterarm des Probanden aufgebracht. Danach wird die behandelte Fläche an den Rändern umklebt. Die restliche Armfläche wird mit einem Plastikhandschuh, der bis zu den Achseln reicht, bedeckt. Dadurch kann eine Beeinträchtigung der Mücken durch Hautausscheidungen, die auf die Mücken attraktiv wirken, ausgeschlossen werden.

Der auf diese Weise behandelte Arm wird in den Mückenkäfig eingebracht, wobei der Kontakt der offenen Armfläche mit der Gaze verhindert wird, um eine Kontamination der Gaze und den gleichzeitigen Verlust von Repellentsubstanz von der Armfläche zu vermeiden. Das Einbringen des Armes erfolgt direkt nach der Applikation in stündlichem Abstand. Die Expositionszeit beträgt jeweils 5 min. Das Ende der Wirkungsdauer einer Substanz wird angenommen, wenn sich während dieser Zeitspanne mindestens 2 Mücken auf der behandelten Fläche vollgesogen haben.

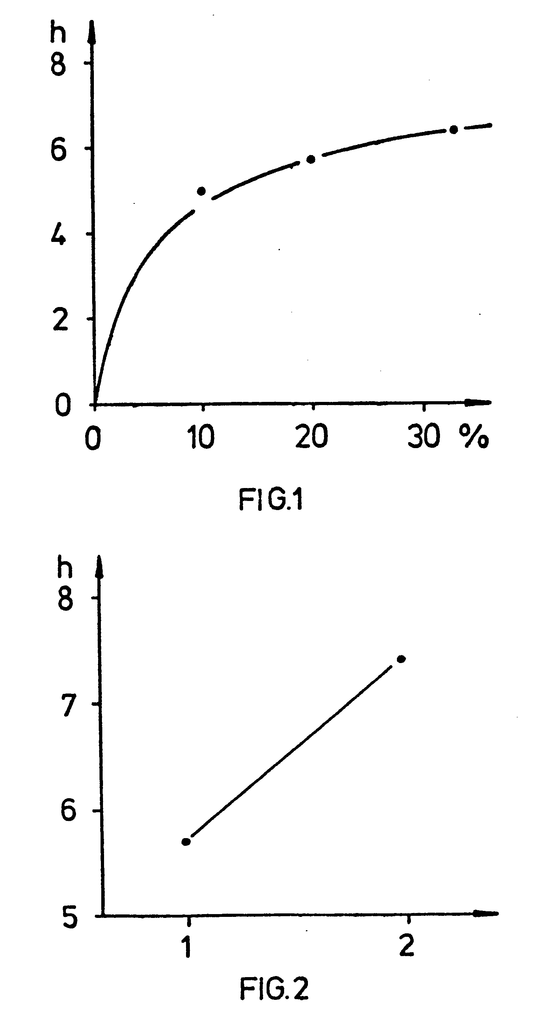

Fig. 1 zeigt die nach oben beschriebener Methodik ermittelte Abhängigkeit der Wirksamkeitsdauer von der DEET-Konzentration. Auf der Abszisse wurde hierzu die Konzentration des DEET in % und auf der Ordinate die Wirksamkeitsdauer in Stunden aufgetragen.

Die in Fig. 1 dargestellte Funktion zeigt im Bereich höherer Konzentrationen einen ungünstigen Verlauf. Dies ist nach unseren Untersuchungen zum grossen Teil auf eine Resorption des DEET zurückzuführen. Der resorbierte DEET-Anteil steht nicht mehr zur Insektenvertreibung zur Verfügung.

Es ist bekannt, dass den alkoholischen Lösungen von DEET auch andere Stoffe wie Parfümöle, Wasser, Lösungsvermittler und Fette zugesetzt werden. Diese Zusätze dienen zur Verbesserung von Duft, Konsistenz, Verteilbarkeit und Hautgefühl.

Ausserdem sind Kombinationen mit anderen Repellentwirkstoffen [Charlet, E., Finkel, P., Strickmann, H., „Parf. u. Kosm.", 59, 367 (1978)] bekannt.

Es wurden nun Stoffe gesucht, die die Resorption von DEET durch die menschliche Haut vermindern und damit die Wirksamkeitsdauer erhöhen. Überraschenderweise konnte gefunden werden, dass durch Zusatz von Ricinusöl eine deutlich verminderte Resorption und eine verbesserte Wirksamkeitsdauer erreicht wurde. Ricinusöl besitzt selbst keine Repellent-Wirkung.

Fig. 2 zeigt einen Vergleich der Wirksamkeitsdauer von 20%igen DEET-Formulierungen ohne 1 und mit Zusatz von 15% Ricinusöl 2.

Auf der Abszisse sind die beiden Formulierungen, auf der Ordinate die Wirksamkeitsdauer in Stunden aufgetragen. Die Wirksamkeitsdauer von 20% DEET in Isopropanol wird durch Zusatz von 15% Ricinusöl von 5,7 h auf 7,9 h erhöht. Die Formulierung mit 20% DEET und Zusatz von Ricinusöl übertrifft damit sogar die Wirksamkeitsdauer einer 30%igen DEET-Lösung ohne Zusatz.

Durch die erfindungsgemässen Formulierungen wurde eine verlängerte Wirksamkeit beziehungsweise bei gleicher Wirksamkeit eine geringere Einsatzkonzentration des DEET erreicht.

Die Konzentration von DEET bei den erfindungsgemässen Formulierungen liegt zwischen 5 und 50%, vorzugsweise jedoch zwischen 10 und 40%. Ganz besonders bevorzugt sind Konzentrationen zwischen 15 und 25%.

Unter Berücksichtigung der kosmetischen Erfordernisse sollte die Konzentration von Ricinusöl zwischen 5 und 35%, vorzugsweise jedoch zwischen 10 und 20% liegen.

Man verwendet handelsübliches Ricinusöl DAB VII. Als Lösungsmittel eignen sich ein- und mehrwertige Alkohole wie z. B. Ethanol, Isopropanol, Propylenglykol oder Glycerin. Weitere Zusätze können sein: andere Repellentien [Charlet, E., Finkel, P., Strickmann, H., „Parf. u. Kosm.", 59, 367 (1978)]; Parfümöle zur Überdeckung des Eigengeruchs; Riechstoffe mit eigener Repellentwirkung (z. B. Zitronenöl, Lavendelöl, Zimtöl), Wasser und kosmetische Grundstoffe wie z. B. Isopropylmyristat, Paraffinöl usw. [Schrader, K., „Grundlagen und Rezepturen der Kosmetika", Dr. Alfred Hüthig Verlag Heidelberg (1979)].

Die erfindungsgemässen Formulierungen werden wie die bekannten Formulierungen (Lotion/Spray) in verbrauchergerechter Menge auf frei getragene Hautstellen aufgetragen.

Die Herstellung bzw. Abfüllung der erfindungsgemässen Lotionen und Aerosole erfolgt wie in Nowak, G.A. [,,Die Kosmetischen Präparate", Verlag für chem. Industrie H. Ziolkowsky KG, Augsburg (1975)] beschrieben.

Die nachstehenden Beispiele geben einige typische Rezepturen.

| 1. | DEET | 5 Teile |
|---|---|---|
| | Ricinusöl | 5 Teile |
| | Isopropanol | 90 Teile |
| 2. | DEET | 50 Teile |
| | Ricinusöl | 35 Teile |
| | Isopropanol | 15 Teile |
| 3. | DEET | 20 Teile |
| | Ricinusöl | 15 Teile |
| | Isopropanol | 65 Teile |
| 4. | DEET | 12 Teile |
| | Ricinusöl | 8 Teile |
| | Ethanol | 70 Teile |
| | Wasser | 10 Teile |
| 5. | DEET | 25 Teile |
| | Ricinusöl | 10 Teile |
| | Isopropanol | 45 Teile |
| | Ethanol | 19 Teile |
| | Parfümöl | 1 Teil |
| 6. | DEET | 15 Teile |
| | Ricinusöl | 20 Teile |
| | Wasser | 5 Teile |
| | Isopropylmyristat | 2 Teile |
| | Isopropanol | 57 Teile |
| | Lavendelöl | 1 Teil |
| 7. | DEET | 18 Teile |
| | Ricinusöl | 12 Teile |
| | Dimethylphthalat | 4 Teile |
| | Ethanol | 65 Teile |
| | Parfümöl | 1 Teil |
| 8. | DEET | 15 Teile |
| | Ricinusöl | 15 Teile |
| | Ethylhexandiol | 5 Teile |
| | Isopropanol | 57 Teile |
| | Wasser | 5 Teile |
| | Propylenglykol | 2 Teile |
| | Parfümöl | 1 Teil |
| 9. | DEET | 10 Teile |
| | Ricinusöl | 14 Teile |
| | Paraffinöl | 3 Teile |
| | Isopropanol | 72 Teile |
| | Parfümöl | 1 Teil |
| 10. | DEET | 10 Teile |
| | Ricinusöl | 10 Teile |
| | Propylenglykol | 20 Teile |
| | Isopropanol | 59 Teile |
| | Parfümöl | 1 Teil |
| 11. | DEET | 12 Teile |
| | Ricinusöl | 15 Teile |
| | Glycerin | 8 Teile |
| | Isopropylmyristat | 3 Teile |
| | Isopropanol | 62 Teile |

## Patentansprüche

1. Insektenvertreibungsmittel, enthaltend N,N-Diethyl-m-toluamid (DEET) auf der Basis alkoholischer Lösungen, dadurch gekennzeichnet, dass sie zusätzlich Ricinusöl enthalten.

2. Insektenvertreibungsmittel nach Anspruch 1, dadurch gekennzeichnet, dass sie 5-50%, vorzugsweise 10-40%, besonders bevorzugt 15-25% DEET enthalten.

3. Insektenvertreibungsmittel nach Anspruch 1, dadurch gekennzeichnet, dass sie 5-35%, vorzugsweise 10-20% Ricinusöl enthalten.

4. Insektenvertreibungsmittel nach Anspruch 1, dadurch gekennzeichnet, dass sie weitere Repellentien enthalten.

5. Insektenvertreibungsmittel nach Anspruch 1, dadurch gekennzeichnet, dass sie Parfümöle und/oder Riechstoffe enthalten.

6. Insektenvertreibungsmittel nach Anspruch 1, dadurch gekennzeichnet, dass sie Wasser enthalten.

## Claims

1. Insect repellents, containing N,N-diethyl-m-toluamide (DEET) and based on alcoholic solutions, characterised in that they additionally contain castor oil.

2. Insect repellents according to Claim 1, characterised in that they contain 5-50%, preferably 10-40%, particularly preferably 15-25% of DEET.

3. Insect repellents according to Claim 1, characterised in that they contain 5-35%, preferably 10-20% of castor oil.

4. Insect repellents according to Claim 1, characterised in that they contain further repellents.

5. Insect repellents according to Claim 1, characterised in that they contain perfume oils and/or odorants.

6. Insect repellents according to Claim 1, characterised in that they contain water.

## Revendications

1. Compositions pour éloigner les insectes, contenant du N,N-diéthyl-m-toluamide (DEET) à base de solutions alcooliques, caractérisées en ce qu'elles contiennent en outre de l'huile de ricin.

2. Compositions pour éloigner les insectes suivant la revendication 1, caractérisées en ce qu'elles contiennent 5 à 50%, de préférence de 10 à 40%, notamment 15 à 25% de DEET.

3. Compositions pour éloigner les insectes suivant la revendication 1, caractérisées en ce qu'elles contiennent 5 à 35%, de préférence de 10 à 20% d'huile de ricin.

4. Compositions pour éloigner les insectes suivant la revendication 1, caractérisées en ce qu'elles contiennent d'autres répulsifs.

5. Compositions pour éloigner les insectes suivant la revendication 1, caractérisées en ce qu'elles contiennent des essences parfumées et/ou des substances odorantes.

6. Compositions pour éloigner les insectes suivant la revendication 1, caractérisées en ce qu'elles contiennent de l'eau.

FIG.1

FIG.2